# EUROPÄISCHE PATENTSCHRIFT

(11) **EP 0 808 859 B1**
(45) Veröffentlichungstag und Bekanntmachung des Hinweises auf die Patenterteilung: **13.10.1999**
(21) Anmeldenummer: 97107863.9
(22) Anmeldetag: 14.05.1997
(51) Int. Cl.: C08G 18/08, C08J 3/03

(54) **Spritzbare Abdichtung von Bauwerken auf Basis einer koagulierbaren Polyurethandispersion**
Sprayable seal of building constructions based on coagulable polyurethane dispersions
Joint d'étanchéité de constructions pulvérisable à partir d'une dispersion coagulable de polyuréthane

(30) Priorität: 20.05.1996 CH 126996
(43) Veröffentlichungstag der Anmeldung: 26.11.1997
(73) Patentinhaber: Sika AG, vorm. Kaspar Winkler & Co., CH-8048 Zürich (CH)
(72) Erfinder: Bösch, Klemens, 8733 Eschenbach (CH); Stadelmann-Sidler, Ursula, 8046 Zürich (CH); Bürge, Theodor A., 8954 Geroldswil (CH); Pfenninger, Ueli, 8804 Au (CH)
(74) Vertreter: Blum, Rudolf Emil Ernst

(56) Entgegenhaltungen:
- EP-A- 0 574 198
- EP-A- 0 684 286
- US-A- 3 565 844
- US-A- 3 928 676
- DATABASE WPI Week 8132 Derwent Publications Ltd., London, GB; AN 57641D XP002022415 & JP 56 074 144 A (TAKEDA CHEMICAL) , 19.Juni 1981
- DATABASE WPI Week 7227 Derwent Publications Ltd., London, GB; AN 44127T XP002022416 & JP 47 023 904 A (MIZUNO Y KATO Y MAKI) , 1972

## Beschreibung

Die vorliegende Erfindung beschreibt eine spritzbare Abdichtung gegen Wasser und ihre Applikation speziell in Tunnels.

### Stand der Technik

Tunnels werden, wo nötig, gegen das Eindringen von Wasser abgedichtet. Dazu verwendet man üblicherweise Bitumen- oder Polymerdichtungsbahnen, z.B. basierend auf PVC, Butylkautschuk oder Polyolefinen, welche an den Tunnelwänden befestigt und miteinander verklebt beziehungsweise verschweisst werden. Eindringendes Wasser aus dem Untergrund wird der Kunststoffschicht entlang abgeleitet und in Drainagen gesammelt.

Zum Stand der Technik gehören auch spritzbare Abdichtungen auf der Basis von ungesättigten Polyestern, Bitumenemulsionen, Neopren-Latex und ein- oder 2-komponentige reaktive Polyurethanbeschichtungen.

Diese Systeme weisen eine Reihe von Nachteilen auf:

Die Dichtungsbahnen sind aufwendig zum Verlegen. Die Montage und die Verschweissung bzw. die Verklebung ist personalintensiv. Es wird ein Gerüst benötigt, welches andere Arbeiten im Tunnel behindert. Besonders bei komplizierten geometrischen Konstruktionen wie Nischen oder Abzweigungen ist der Arbeitsaufwand zum Abdichten überproportional hoch, da sehr viele Nahtstellen nötig sind.

Die meisten gespritzten Abdichtungen weisen aufgrund von gesundheitsgefährdenden Stoffen und/oder brand- oder explosionsgefährlichen Stoffen, welche bei der Applikation in Form von Dämpfen oder Aerosolen frei werden, grosse Nachteile auf. Die Gesundheitsgefährdung betrifft dabei nicht nur das verarbeitende Personal (dieses kann z.B. mit Atemschutzgeräten ausgerüstet werden), sondern zusätzlich die zahlreichen Personen, welche gleichzeitig andere Arbeiten auf der Tunnelbaustelle verrichten.

So gelangt z.B. beim Verarbeiten von ungesättigten Polyestern monomeres Styrol in die Umgebung, welches gesundheitsschädlich und brand- und explosionsgefährlich ist. Zudem sind Polyester-Polymere in Kontakt mit Beton nicht beständig. Sie neigen im alkalischen Milieu zum Verseifen, was einen Polymerabbau bewirkt.

Bei gespritzten Bitumen-Systemen liegt der Nachteil bei der mangelnden Elastizität des resultierenden Filmes. Risse, die sich im Untergrund bilden können, werden von der Beschichtung nicht überbrückt, was zu einer Undichtigkeit des Systems führt. Eine gute Rissüberbrückung, d.h. genügend Elastizität, ist für eine gespritzte Abdichtung von entscheidender Bedeutung.

Neopren-Latex enthält Chlor, welches bei einem allfälligen Brandausbruch sehr toxische Salzsäure bildet und deshalb unerwünscht ist.

Beim Verspritzen der reaktiven Ein- oder 2-Komponenten Polyurethan-Abdichtungen gelangen gesundheitsschädliche Isocyanat-Aerosole in die Luft, was das Tragen eines Atemschutzes nötig macht. Zudem weisen diese Systeme eine ungenügende Haftung auf feuchten Untergründen auf. Vor der Applikation in Tunnels muss deshalb ein Primer appliziert werden. Wird die Membran anschliessend mit Spritzbeton überschichtet, so muss auf die Polyurethan-Membran eine zusätzliche Haftbrücke in Form eines Primers aufgebracht werden, um ein Abrutschen des Spritzbetons bei der Applikation zu verhindern. Beim Verarbeiten dieser Primer werden gesundheitsschädliche und brand- und explosionsgefährliche Lösemittel frei, und zudem verteuern diese zusätzlichen Arbeitsgänge das System.

Das Aufbringen von Polyurethanbeschichtungen und deren Aushärtung durch einen Koagulationsprozess ist aus verschiedenen veröffentlichten Anwendungen bereits bekannt.

In der tschechischen Veröffentlichung CS 266865 und in den japanischen Veröffentlichungen JP 05186631, JP 04308281 und JP 47023904 werden Anwendungen beschrieben, wo Polyurethan-Polymere, gelöst in organischen Lösemitteln, auf den zu beschichtenden Untergrund aufgebracht werden und anschliessend in einem Tauchbad, welches gefüllt ist mit einer mit der Polymer-Lösung unverträglichen Flüssigkeit, koaguliert und anschliessend getrocknet werden. So werden wasserdichte Beschichtungen erhalten, welche aufgrund von Mikroporen atmungsaktive Eigenschaften aufweisen. Angewendet wird dieses Verfahren vor allem in der Herstellung von Beschichtungen für Kunstleder. Ein solches Verfahren ist jedoch für die erfindungsgemässe Anwendung, nämlich das Abdichten von Bauwerken, nicht geeignet. Einerseits soll die erfindungsgemässe Abdichtung aus den bereits genannten Gründen frei sein von organischen Lösemitteln und andererseits eignet sich die Koagulation in einem Tauchbad nicht für den Einsatz an Bauwerken wie z.B. Tunnels, da die beschichteten Teile nicht mobil sind und deshalb nicht in ein Bad getaucht werden können.

In EP 0 684 286 Al und in der japanischen Veröffentlichung JP 56074144 werden eine durch Wärme koagulierbare Polyurethandispersionen beschrieben. Auch diese Koagulationsprozesse sind für den erfindungsgemässen Einsatz nicht geeignet, da die zu beschichtenden Teile an Bauwerken nicht mobil sind und deshalb nicht z.B. in einem Ofen koaguliert werden können.

US 3,565,844 beschreibt einen koagulierbaren Urethangummi. Das koagulierbare System wird erzielt durch Einemulgieren eines Prepolymers in eine wässrige Lösung, die einen Emulgator enthält. Der Emulgator ist ein carboxyliertes oberflächenaktives Mittel. Die Koagulation erfolgt entweder durch Säure oder durch Hitze.

In US 3,928,676 wird eine stabile wässrige Zusammensetzung enthaltend ein colloidales synthetisches Harz beschrieben. Die Zusammensetzung enthält neben dem Harz ein Aluminiumhydroxidsalz eines hochmolekularen, wasserlöslichen, polymeren, Polycarboxy enthaltenden Verdickungsharzes. Die Koagulation wird durch Verdünnung ausgelöst. Hauptanwendung ist die Stabilisierung von Faservliesen.

Um Bauwerke wie z.B. Tunnels durch eine wässrige Beschichtung wasserdicht abzudichten, wobei die Filmbildung durch einen Koagulationsprozess beschleunigt wird, muss die Koagulation am Objekt erfolgen können, ohne dass dieses bewegt wird.

In der europäischen Patentanmeldung EP 0 574 198 wird eine wässrige Emulsion beschrieben, welche auf zementöse Untergründe aufgespritzt wird und dabei durch das Beimischen eines Koagulationsmittels koaguliert wird. Diese Emulsion dient als Primer, auf welchen nachträglich eine vorfabrizierte Abdichtungsbahn, welche mit einer bituminösen Klebschicht versehen ist, aufgeklebt wird. Der Primer hat dabei die Aufgabe, die Haftung dieser Abdichtungsbahn auf dem Untergrund zu verbessern. Dieser Primer kann aber nicht mit einer wasserdichten Membran verglichen werden, denn erst das Aufkleben der vorfabrizierten Abichtungsbahn bringt die Wasserdichtheit. An einen solchen Primer werden also keinerlei Ansprüche betreffend z.B. mechanische Eigenschaften und Dichtheit gestellt.

Grundsätzlich sind spritzbare Abdichtungen für den Einsatz in Tunnels jedoch erwünscht, da sie einige Vorteile gegenüber den Polymerdichtungsbahnen aufweisen, wie
- schnelle Applikation, vor allem bei komplizierten geometrischen Verläufen,
- kein Erstellen von Montagegerüsten notwendig, und somit keine Behinderung von anderen Arbeiten im Tunnel.

Ziel der vorliegenden Erfindung war es, eine spritzbare Abdichtung ohne Nachteile wie Emission von gesundheitsschädlichen oder brand- und explosionsgefährlichen Stoffen, wie Isocyanate oder Lösemittel, ohne mangelhafte mechanische und chemische Eigenschaften und ohne komplizierten Systemaufbau aufgrund ungenügender Haftungseigenschaften bereitzustellen, die mittels eines Koagulationsprozesses aushärtet und keinen Primer für eine gute Haftung auf zementösen Untergründen benötigt. Ein weiteres Ziel der vorliegenden Erfindung war ein Verfahren zum Aufbringen der erfindungsgemässen Abdichtungen.

### Beschreibung der Erfindung

Die oben angegebenen Ziele wurden erreicht durch das Bereitstellen einer Abdichtung gemäss Anspruch 1. Weitere Aspekte der vorliegenden Erfindung sind in den anderen unabhängigen Ansprüchen, spezielle Ausführungsformen in den abhängigen Ansprüchen definiert.

Im Gegensatz zu reaktiven Ein- oder Zweikomponenten Polyurethanbeschichtungen enthalten die im Rahmen dieser Erfindung bereitgestellten wässrigen Dispersionen von Polyurethanen keine freien Isocyanate und keine Lösemittel. Somit besteht keine Gesundheitsgefährdung für die Verarbeiter und andere in der Nähe anwesende Personen und keine Brand- oder Explosionsgefahr. Die Dispersionen erhärten im allgemeinen durch physikalische Austrocknung, nicht durch chemische Reaktionen und zeigen meist eine gute Haftung auf Beton. Der Filmbildungsprozess bedarf jedoch der Verdunstung von Wasser, was bei den üblichen klimatischen Verhältnissen in Tunnels sehr lange dauert. Der Filmbildungsprozess von Polyurethandispersionen kann beschleunigt werden, wenn die Dispersion mit Hilfe eines oder mehrerer Zusätze koaguliert wird. Als Koagulationsmittel können Säuren wie z.B. Salzsäure, Schwefelsäure, Phosphorsäure, Basen wie z.B. Natrium- oder Kaliumhydroxid oder Natriumsilikat, Salze wie z.B. Kalziumnitrat, Kalziumchlorid, Aluminiumsulfat oder Kaliumcarbonat, Zement, Gips oder andere hydraulische oder latent hydraulische Bindemittel verwendet werden. Entscheidend ist, dass das Koagulationsmittel das Emulgatorsystem der verwendeten Dispersion derart stört, dass die Polymerteilchen ausgefällt werden.

Überraschenderweise wurde gefunden, dass die im Rahmen dieser Erfindung bereitgestellten Polyurethandispersionen durch Koagulation Filme bilden, welche wie die physikalisch getrockneten Filme gute Dehnungen, Zugfestigkeiten, Rissüberbrückung und Chemikalienresistenz aufweisen.

Nicht alle Dispersionen bilden einen geschlossenen Film, wenn sie koaguliert werden. Einerseits muss durch das Koagulationsmittel das Emulgatorsystem der Dispersion derart gestört werden, dass die Dispersionsteilchen aus der Wasserphase ausgefällt werden. Andererseits muss die Glasumwandlungstemperatur des Polymers tief genug sein, so dass ein Verfliessen der ausgefällten Dispersionsteilchen zu einem homogenen Film bei Umgebungstemperatur stattfindet, ohne den Einsatz von zusätzlichen Filmbildehilfsmitteln oder Weichmachern. Würden Filmbildehilfsmittel oder Weichmacher eingesetzt, besteht die Gefahr, dass diese durch das Einwirken von Feuchtigkeit ausgewaschen werden, was einerseits eine Verschmutzung des Wassers bedeutet und anderseits zu einem Verspröden des applizierten Filmes führen kann. Zudem sollte der Festkörpergehalt der Dispersion nicht zu tief liegen, so dass der Schwund beim Abtrocknen des Wassers nicht zu gross wird. Bei einem zu grossen Schwund könnten sich Risse in der Membran bilden.

Im Rahmen dieser Erfindung hat es sich gezeigt, dass Polyurethan- und/oder Polyurethanharnstoff-Dispersionen mit einem anionischen internen Emulgatorsystem, einer Glasumwandlungstemperatur des Polymers von kleiner als -30°C und einem Festkörpergehalt von mehr als 40 % gut geeignet sind für den Einsatz als spritzbare Abdichtung von Bauwerken mit einer beschleunigten Aushärtung mittels Koagulation.

Wichtig für die Bildung eines homogenen und dichten Filmes ist ebenfalls die Koagulation unter kontrollierten Bedingungen. Dies bedingt eine homogene Vermischung von Dispersion und Koagulationsmittel vor dem Einsetzen der Koagulation. Um dies zu Erreichen eignet sich eine Spritzapparatur, die eine Vermengung der Dispersion mit dem Koagulationsmittel in einer Düse oder direkt ausserhalb einer Düse oder mehrerer Düsen gestattet.

Die erfindungsgemässe wasserdichte Membran formt einen dichten Film kurz nach der Applikation, der nicht reemulgierbar ist. Dieser kann das Eindringen von Wasser schon nach wenigen Minuten verhindern und bereits zu dieser Zeit mit Spritzbeton oder Konstruktionsbeton überschichtet werden. Die Membran zeigt eine gute Haftung zu trockenem und feuchtem Beton und benötigt deshalb keinen Primer. Nachfolgend aufgespritzter Beton haftet ausgezeichnet auf der Membran.

Die erfindungsgemässe spritzbare Abdichtung besteht aus zwei Komponenten A und B, die wie folgt aufgebaut sind resp. die nachfolgend aufgeführten Kriterien erfüllen müssen:
**A)** Mindestens einer wässrigen Polyurethandispersion, gegebenenfalls gemischt mit anorganischen Füllstoffen wie z.B. Calziumcarbonat, Quarzmehl oder Aluminiumhydroxid, organischen Füllstoffen wie z.B. Russ oder Polymerpulver, anorganischen Pigmenten wie z.B. Titandioxid oder Eisenoxid, oder organischen Pigmenten und weiteren Zusätzen wie Fasern, Entschäumern, Filmbildehilfsmitteln, Weichmachern, Verdickern, Fungiziden, Verlaufsmitteln, Frostschutzmitteln, Haftverbesserern und Netzmitteln.
   Besonders geeignet sind wässrige Polymer-Dispersionen enthaltend Dispersionsteilchen aus Polyurethan oder Polyurethanharnstoff mit einem vorwiegend aus Polyether aufgebauten Grundgerüst und an das Polymer gebundenen anionischen Salzgruppen, wobei die anionischen Gruppen Gruppierungen der Formel

   -COO⁻ Me⁺ und / oder -SO₃⁻ Me⁺

   sind, in welchen Me⁺ ein Aequivalent eines Metallkations oder eines Ammoniumkations der Formel NR₃H⁺ mit R = H oder Alkyl, insbesonders R = H, CH₃ oder C₂H₅ darstellt, und wobei das Polymermaterial durch Reaktion der folgenden vier Komponenten gebildet wird:
   a) einem Polyol, hauptsächlich einem Polyether-Polyol, mit einer Funktionalität von 1.5 - 3 und
   b) einer Verbindung, die in ihrem Molekül mindestens eine anionische Salzgruppe der oben angegebenen Struktur, gegebenenfalls in Form der freien Carbonsäure bzw. Sulphonsäure, sowie mindestens zwei gegenüber Isocyanat reaktive Gruppen wie z.B. Hydroxygruppen, Aminogrupen oder Mercaptogruppen enthält, und
   c) einem aliphatischen, cycloaliphatischen oder aromatischen Isocyanat mit mindestens zwei Isocyanatgruppen pro Molekül, und
   d) einem Kettenverlängerungsmittel, d.h. einer Verbindung, welche mindestens zwei Isocyanatreaktive Gruppen enthält, wie z.B. ein Wassermolekül oder ein Diamin,
   wobei das Verhältnis von a) : b) : c) : d) so gewählt ist, dass alle Isocyanatgruppen umgesetzt sind.
   Ein bevorzugtes Polymer erfüllt die folgenden Kriterien:
   b) wird in einer Menge eingesetzt, die 5-30 Milliequivalente anionische Gruppen pro 100 g Polymer ergibt,
   a) + b) : c) wird derart gewählt, dass 1,3 - 2,8 NCO-Gruppen auf eine NCO reaktive Gruppe kommen, und
   d) wird derart gewählt, dass nach der Reaktion keine NCO-Gruppen mehr vorhanden sind.

   Die Dispersion weist einen Festkörpergehalt von mindestens 40% auf und die Glasumwandlungstemperatur des Polymers ist kleiner oder gleich -30°C.
**B)** Koagulationsmittel, gegebenenfalls gemischt mit anorganischen Füllstoffen wie z.B. Calziumcarbonat, Quarzmehl oder Aluminiumhydroxid, organischen Füllstoffen wie z.B. Russ oder Polymerpulver, anorganischen Pigmenten wie z.B. Titandioxid oder Eisenoxid, oder organischen Pigmenten und weiteren Zusätzen wie Fasern, Entschäumern, Filmbildehilfsmitteln, Weichmachern, Verdickern, Fungiziden, Verlaufsmitteln, Frostschutzmitteln, Haftverbesserern und Netzmitteln, wobei der Anteil von Polymer im Festkörper der Abdichtung Zwischen 10 und 99%, bevorzugt zwischen 30 und 60%, liegt.

Geeignete Koagulationsmittel sind - wie bereits vorstehend aufgeführt - Säuren wie z.B. Salzsäure, Schwefelsäure, Phosphorsäure, Basen wie z.B. Natrium- oder Kaliumhydroxid oder Natriumsilikat, Salze wie z.B. Kalziumnitrat, Kalziumchlorid, Aluminiumsulfat oder Kaliumcarbonat, Zement, Gips oder andere hydraulische oder latent hydraulische Bindemittel oder Mischungen solcher Verbindungen. Die Komponente B kann flüssig, dispersionsartig oder pulverförmig vorliegen.

Die Herstellung der Polyurethan- oder Polyurethanharnstoff-Dispersion erfolgt nach üblichen, in der Literatur beschriebenen Herstellprozessen, z.B. mit dem Acetonverfahren oder dem Präpolymer-Ionomer-Mischverfahren, beide beschrieben bei D. Dieterich, Die angewandte Makromolekulare Chemie, 98, (1981), 133-165 (Nr.1568). Dabei wird das Polymer durch Vorreaktion von a) + b) + c) und nachfolgendes Ausreagieren mit d) hergestellt, wobei mindestens ein Teil von d) Wasser sein kann.

Neben Dispersionsteilchen aus Polyurethan und/oder Polyurethanharnstoff, wie sie oben beschrieben wurden, kann die Komponente A weitere Polymerdispersionsteilchen enthalten oder sie kann vor oder bei der Verwendung mit einer weiteren Polymerdispersion vermischt und als solche Mischung mit der Koagulationsmittel-Komponente B versetzt werden.

Beim Vermengen der Komponenten in einer geeigneten Spritzapparatur und anschliessenden Auftrag entsteht der gewünschte flexible, wasserdichte Film. Die Filmbildung beruht auf dem Prinzip der Koagulation. Durch den Zusatz des Koagulationsmittels wird die Abstossung der Dispersionsteilchen gegeneinander aufgehoben. Die Teilchen verkleben untereinander und verdrängen das Wasser aus dem entstehenden Film. Diese Filmbildung entsteht innerhalb weniger Sekunden nach Vermengung von Koagulationsmittel und Polyurethan- und/oder Polyurethanharnstoffdispersion. Sie ist damit 100 bis 10'000 mal schneller als die Filmbildung durch physikalische Austrocknung. Zudem lassen sich Schichten von mehreren Millimetern Stärke auftragen, was mit physikalisch trocknenden Dispersionen kaum denkbar ist, da diese eine viel zu lange Trocknungszeit für einen Einsatz als Tunnelabdichtung benötigen.

Die erfindungsgemässe Membran wird auf das abzudichtende Bauwerk mittels einer Spritzapparatur appliziert. Dabei kann die Vermischung der Komponenten während des Spritzvorgangs kurz vor dem Auftrag auf den Untergrund ausserhalb der Düse oder mehrerer Düsen der Spritzmaschine erfolgen. Um nach dem Abdichten ein Abfliessen von eventuell vorhandenem drückendem Wasser zu ermöglichen, kann zwischen der Membran und dem Untergrund, auf welchen die Membran appliziert wird, ein Drainagesystem vorgesehen werden, insbesonders ein verlegbares, wasserdurchlässiges Drainage-System, in welchem solches Wasser gesammelt und zwischen Untergrund und Membran gezielt abgeleitet wird.

Dazu werden in den Bedürfnissen angepassten Abständen beispielsweise vorfabrizierte wasserdurchlässige Streifen auf dem Untergrund befestigt, auf welchen anschliessend die Membran aufgespritzt wird. Mögliche Beispiele solcher Drainage-Streifen sind im Tunnelbau zur Wasserableitung bekannte Systeme wie die Drainage-Vliese der Firma Landolt in Näfels (CH), z.B. Superdrain®, U-förmige Drainage-Rinnen in Form drahtverstärkter Folien der Firma Aliva in Widen (CH), Kunststoff-Noppenbahnen der Firma Sytec in Bern (CH), z.B. Tefond®, sowie vliesüberdeckte Drahtgewirre der Firma Naue Fasertechnik in Lübbecke (D), z.B. Secudrän®.

### Beispiele:

### Beispiel 1

Eine wässrige Dispersion eines aliphatischen Polyether-Polyurethan-Polymeres ohne freie Isocyanatgruppen und ohne Lösemittel wurde folgendermassen hergestellt:
61.6 GT (Gewichtsteile) eines Polypropylenglykoles mit einer Funktionalität von zwei und einem Molekulargewicht von 2000 und 1.9 GT Dimethylolpropionsäure wurden umgesetzt mit 13.2 GT Isophorondiisocyanat und 6.6 GT Dicyclohexylmethandiisocyanat, bis der Gehalt an freien Isocyanatgruppen konstant war. Dazu wurde die Mischung in Anwesenheit von 0.04 GT Dibutylzinndilaurat und 15 GT Methylethylketon auf 80°C aufgeheizt.

Nach Abkühlen auf 30°C wurden 1.27 GT Triethylamin und anschliessend 77 GT Wasser zugegeben. Die entstandene Emulsion wurde unter Vakuum auf 60°C aufgeheizt und bis zu einem Festkörpergehalt von 55 % aufkonzentriert. Dabei wurde das Methylethylketon abdestilliert und die Isocyanatgruppen reagierten mit dem Wasser.

Diese Dispersion wurde auf einen Betonuntergrund gespritzt. In einer Düse wurde sie mit einer pulverförmigen Mischung von Zement und Calziumcarbonatfüllstoff, welche mit einem Luftstrom gefördert wurde, vermengt. Das Verhältnis von Polymer : Zement : Füllstoff betrug 1.1 : 0.1 : 0.9. Bereits nach 30 Sekunden formte die Mischung eine feste, dichte Membran auf der Betonoberfläche.

Die mechanischen Eigenschaften der Membran wurden am freien Film gemessen.

Sie betrugen:
- nach 7 Tagen:: 2.6 MPa Zugfestigkeit und 300% Bruchdehnung
- nach 2 Monaten:: 2.9 MPa Zugfestigkeit und 250% Bruchdehnung
- nach 6 Monaten:: 2.8 MPa Zugfestigkeit und 250% Bruchdehnung

### Beispiel 2

Die pulverförmige Mischung aus Beispiel 1 wurde mit 5% Eisenoxidpigmenten je einmal gelb und einmal rot pigmentiert. Danach wurden gemäss Beispiel 1 zwei Schichten in diesen Farben gespritzt, um eine sichtbare Überdeckung des Untergrundes zu garantieren. Die totale Filmschichtdicke betrug 3 mm. Ein Wasserdichtigkeitstest nach DIN 1048 zeigte keine Wasserpenetration bei 3 bar Druck.

### Beispiel 3

Die Mischung aus Beispiel 1 wurde in einer Schichtdicke von 3 mm auf eine sandgestrahlte Gartenplatte aufgespritzt und nach 30 Minuten mit Spritzbeton überschichtet. Eine Woche nach der Applikation wurde das System auf Haftung geprüft. Die Haftzugfestigkeit nach ISO 4624 betrug 0.5 MPa, wobei ein Adhäsivbruch zwischen Gartenplatte und gespritztem Film auftrat.

### Beispiel 4

Die Polyurethandispersion aus Beispiel 3,wurde mit einer 5%-igen Lösung von K₂CO₃ mit Hilfe einer 2-Komponenten Spritzpistole appliziert und zur Koagulation gebracht. Das Mischungsverhältnis von Polymerdispersion zu Koagulierungslösung betrug 10 : 1 Gewichtsteile. Der entstandene Film wurde auf Zugfestigkeit und Dehnung geprüft. Die Werte betrugen:
- nach 7 Tagen:: 9.8 MPa Zugfestigkeit und 750% Bruchdehnung
- nach 2 Monaten:: 10.6 MPa Zugfestigkeit und 700% Bruchdehnung
- nach 6 Monaten:: 10.8 MPa Zugfestigkeit und 700% Bruchdehnung

### Beispiel 5

Die Polyurethandispersion aus Beispiel 1 wurde mit einem Slurry, bestehend aus 10% Calciumsulfat-Dihydrat, 50% Kreidefüllstoff, 39.9% Wasser und 0.1% Welan Gum Verdicker zur Koagulation gebracht. Das Verhältnis Polymer : Calciumsulfat-Dihydrat : Kreidefüllstoff betrug 1 : 0.15 : 0.75 Gewichtsteile. Der enstandene Film wurde auf Zugfestigkeit und Dehnung geprüft. Die Werte betrugen:
- nach 7 Tagen:: 3.8 MPa Zugfestigkeit und 450% Bruchdehnung
- nach 2 Monaten:: 4.2 MPa Zugfestigkeit und 400% Bruchdehnung
- nach 6 Monaten:: 4.3 MPa Zugfestigkeit und 370% Bruchdehnung

## Patentansprüche

1. Spritzbare Abdichtung für Bauwerke gegen das Eindringen von Wasser, dadurch gekennzeichnet, dass sie mindestens eine Komponente A und mindestens eine Komponente B umfasst oder daraus besteht,
wobei die Komponente A eine Polymerdispersion, enthaltend Dispersionsteilchen aus Polyurethan und/ oder Polyurethanharnstoff mit einem vorwiegend aus Polyether aufgebauten Grundgerüst, ist, mit einer Glasumwandlungstemperatur des Polymers von < -30°C, einem Festkörpergehalt von mindestens 40 % und einem ins Polymer integriertem Emulgatorsystem, und
wobei die Komponente B ein Koagulationsmittel enthält oder daraus besteht, das zu einer Störung des Emulgatorsystems der Komponente A führt, so dass die Dispersionsteilchen unter Filmbildung ausgefällt werden.

2. Spritzbare Abdichtung gemäss Anspruch 1, dadurch gekennzeichnet, dass das Polymer an das Polymer gebundene anionische Salzgruppen aufweist, wobei die anionischen Gruppen Gruppierungen der Formel
-COO⁻ Me⁺ und / oder -SO₃⁻ Me⁺
sind, in welchen Me⁺ ein Aequivalent eines Metallkations oder Ammoniumkations der Formel NR₃H⁺ mit R = H oder Alkyl darstellt und wobei das Polymermaterial durch Reaktion der folgenden vier Komponenten erhältlich ist:
a) einem Polyol, hauptsächlich einem Polyether-Polyol, mit einer Funktionalität von 1.5 - 3 und
b) einer Verbindung, die in ihrem Molekül mindestens eine anionische Salzgruppe der oben angegebenen Struktur, gegebenenfalls in Form der freien Carbonsäure bzw. Sulphonsäure, sowie mindestens zwei gegenüber Isocyanat reaktive Gruppen wie z.B. Hydroxygruppen, Aminogrupen oder Mercaptogruppen enthält, und
c) einem aliphatischen, cycloaliphatischen oder aromatischen Isocyanat mit mindestens zwei Isocyanatgruppen pro Molekül, und
d) einem Kettenverlängerungsmittel, d.h. einer Verbindung, welche mindestens zwei Isocyanat-reaktive Gruppen enthält, wie z.B. ein Wassermolekül oder ein Diamin,
wobei das Verhältnis von a) : b) : c) : d) so gewählt ist, dass alle Isocyanatgruppen umgesetzt sind.

3. Spritzbare Abdichtung gemäss Anspruch 2, dadurch gekennzeichnet, dass die Komponenten a), b), c) und d) die folgenden Kriterien erfüllen:
b) wird in einer Menge eingesetzt, die 5-30 Milliequivalente anionische Gruppen pro 100 g Polymer ergibt,
a) + b) : c) wird derart gewählt, dass 1,3 - 2,8 NCO-Gruppen auf eine NCO reaktive Gruppe kommen,
d) wird derart gewählt, dass nach der Reaktion keine NCO-Gruppen mehr vorhanden sind.

4. Spritzbare Abdichtung gemäss einem der Ansprüche 1 bis 3, dadurch gekennzeichnet, dass die Polyurethan- und /oder Polyurethanharnstoffdispersion in Mischung mit einer weiteren Polymerdispersion verwendet wird.

5. Spritzbare Abdichtung gemäss einem der Ansprüche 1 bis 4, dadurch gekennzeichnet, dass als Koagulationsmittel Säuren, Basen, Salze, Zement oder andere hydraulische oder latent hydraulische Bindemittel oder Mischungen davon in Form von Lösungen, Pulver oder als Dispersion verwendet werden.

6. Spritzbare Abdichtung gemäss einem der Ansprüche 1 bis 5, dadurch gekennzeichnet, dass die Komponente A und/oder die Komponente B anorganische Füllstoffe wie z.B. Calziumcarbonat, Quarzmehl oder Aluminium-hydroxid, organische Füllstoffe wie z.B. Russ oder Polymerpulver, anorganische Pigmente wie z.B. Titandioxid oder Eisenoxid, oder organische Pigmente oder weitere Zusätze wie Fasern, Entschäumer, Filmbildehilfsmittel, Weichmacher, Verdicker, Fungizide, Verlaufsmittel, Frostschutzmittel, Haftverbesserer und Netzmittel enthalten, wobei der Anteil von Polymer im Festkörper der Abdichtung zwischen 10 und 99%, bevorzugt zwischen 30 und 60%, liegt.

7. Verfahren zur Herstellung einer wasserdichten Membrane, dadurch gekennzeichnet, dass eine spritzbare Abdichtung nach einem der Ansprüche 1 bis 6 verwendet wird, wobei die Komponenten A und B in einer Düse oder direkt ausserhalb einer Düse oder mehrerer Düsen einer Spritzmaschine vermengt werden und das derart hergestellte Gemenge direkt auf den zu beschichtenden Untergrund aufgebracht wird.

8. Verfahren gemäss Anspruch 7, dadurch gekennzeichnet, dass vor dem Aufbringen der Abdichtung auf den oder eingelassen in den Untergrund, Drainagemittel aufgebracht werden, derart, dass ein Drainage-System entsteht, durch welches drückendes Wasser hinter der gespritzten Abdichtung abfliessen kann.

9. Verfahren gemäss Anspruch 8, dadurch gekennzeichnet, dass als Drainage-System wasserdurchlässige Drainage-Streifen verlegt werden, z.B. in Form von im Tunnelbau bekannten Drainage-Vliesen.

10. Verfahren zur Herstellung eines Polymers gemäss einem der Ansprüche 2 bis 6, dadurch gekennzeichnet, dass die folgenden Reaktanden zur Reaktion gebracht werden:
a) ein Polyol, insbesonders ein Polyether-Polyol mit einer Funktionalität von 1.5 - 3,
b) eine Verbindung, die in ihrem Molekül mindestens eine anionische Salzgruppe der in Anspruch 2 angegebenen Struktur, gegebenenfalls in Form der freien Carbonsäure bzw. Sulphonsäure, sowie mindestens zwei gegenüber Isocyanat reaktive Gruppen wie z.B. Hydroxygruppen, Aminogrupen oder Mercaptogruppen enthält,
c) ein aliphatisches, cycloaliphatisches oder aromatisches Isocyanat mit mindestens zwei Isocyanatgruppen pro Molekül, und
d) ein Kettenverlängerungsmittel, d.h. eine Verbindung, welche mindestens zwei Isocyanat-reaktive Gruppen enthält;
wobei das Verhältnis von a) : b) : c) : d) so gewählt ist, dass alle Isocyanatgruppen umgesetzt werden.

## Claims

1. Sprayable seal for buildings against the infiltration of water, characterized in that it comprises or consists of at least one component A and at least one component B
whereby the component A is a polymer dispersion comprising dispersion particles of polyurethane and/or polyurethane urea with a basic structure mainly made of polyether, said polyurethane and/or polyurethane urea having a glass transition temperature of ≤ -30°C, said dispersion having a solids content of at least 40 % and an emulsifying system incorporated into the polymer, and
whereby the component B comprises or consists of a coagulation agent leading to a disturbance of the emulsifying system of component A, so that the dispersion particles are precipitated under the formation of a film.

2. Sprayable seal according to claim 1, characterized in that the polymer comprises anionic salt groups bound to said polymer with the anionic groups being groups of the following formula
-COO⁻ Me⁺ and/or -SO₃⁻ Me⁺
wherein Me⁺ is an equivalent of a metal cation or an ammonium cation of the formula NR₃H⁺ with R = H or an alkyl group, and whereby the polymer material is obtained by the reaction of the following four components:
a) a polyol, particularly a polyether polyol with a functionality of 1.5 to 3 and
b) a compound having in its molecule at least one anionic salt group of the above mentioned structure, optionally in the form of the free carboxylic acid or sulfonic acid, as well as at least two isocyanate reactive groups such as e.g. hydroxy groups, amino groups or mercapto groups, and
c) an aliphatic, cycloaliphatic or aromatic isocyanate with at least two isocyanate groups per molecule, and
d) a chain extending agent, i.e. a component comprising at least two isocyanate reactive groups such as e.g. a water molecule or a diamine,
whereby the ratio of a) : b) : c) : d) is selected in a way that all isocyanate groups are reacted.

3. Sprayable seal according to claim 2, characterized in that the components a), b), c) and d) meet the following requirements:
b) is used in an amount resulting in 5 to 30 milli-equivalents of inorganic groups per 100 g of polymer,
a) + b) : c) is selected in a way that 1.3 to 2.8 NCO groups per NCO reactive group are present, and
d) is selected in a way that after the reaction, no NCO groups are present any more.

4. Sprayable seal according to anyone of claims 1 to 3, characterized in that the polyurethane and/or polyurethane urea dispersion is admixed with a further polymer dispersion.

5. Sprayable seal according to any one of claims 1 to 4, characterized in that as coagulation agent acids, bases, salts, cement or other hydraulic or latent hydraulic binders or mixtures thereof are used, which coagulation agent can be used in the form of a solution, powder or as a dispersion.

6. Sprayable seal according to any one of claims 1 to 5, characterized in that the component A, the component B or both of components A and components B comprise inorganic fillers such as e.g. calcium carbonate, quartz powder or aluminum hydroxide, organic fillers such as e.g. carbon black or polymer powders, inorganic pigments such as e.g. titanium dioxide or iron oxide, or organic pigments and further additives such as fibers, defoaming agents, film-forming additives, plasticizers, thickening agents, fungicides, flow-improvers, anti-freezes, adhesion promoters and wetting agents, whereby the polymer amount in the solids of the sealing composition is in the range of 10 to 99 %, preferably between 30 and 60 %.

7. Process for the production of a waterproof membrane, characterized in that a sprayable seal according to one of claims 1 to 6 is used, whereby the components A and B are mixed in a nozzle or directly after one or more nozzles of a spraying apparatus and the thus produced mixture is directly applied to the substratum to be coated.

8. Process according to claim 7, characterized in that prior to the application of the sealing onto the substratum, drainage means are applied on the substratum in a way that a drainage system is generated by which pressing water can be drained behind the membrane.

9. Process according to claim 8, characterized in that water-permeable drainage stripes are laid as the drainage-system, e.g. in the form of non-woven drainage fabrics in the tunnel construction.

10. Process for the production of a polymer according to any one of claims 2 to 6, characterized in that the following reagents are reacted:
a) a polyol, particularly a polyether polyol with a functionality of 1.5 to 3 and
b) a compound having in its molecule at least one anionic salt group of the above mentioned structure, optionally in the form of the free carboxylic acid or sulphonic acid, as well as at least two isocyanate reactive groups such as e.g. hydroxy groups, amino groups or mercapto groups, and
c) an aliphatic, cycloaliphatic or aromatic isocyanate with at least two isocyanate groups per molecule, and
d) a chain extending agent, i.e. a component comprising at least two isocyanate reactive groups such as e.g. a water molecule or a diamine,
whereby the ratio of a) : b) : c) : d) is selected thus that all isocyanate groups are reacted.

## Revendications

1. Joint d'étanchéité de constructions contre la pénétration d'eau, caractérisé en ce qu'il comprend au moins un composant A et au moins
un composant B et en est constitué,
le composant A étant une dispersion polymérique contenant des particules de dispersion de polyuréthanne et/ou de polyuréthanne-urée avec un réseau de base principalement constitué de polyéther, avec une température de transition vitreuse du polymère inférieure ou égale à -30°C, une teneur en solides de 40% minimum et un système d'émulsifiant intégré au polymère, et
le composant B étant ou contenant un agent de coagulation provoquant la destruction du système émulsifiant du composant A, de sorte que les particules de dispersion sont précipitées avec formation d'un film.

2. Joint d'étanchéité pulvérisable selon la revendication 1, caractérisé en ce que le polymère présente des radicaux salins anioniques sur le polymère, les radicaux anioniques étant des groupes de formule
-COO⁻ Me⁺ et / ou -SO₃⁻ Me⁺
où Me⁺ représente un équivalent d'un cation métallique ou d'un cation ammonium de formule NR₃H⁺ dans laquelle R représente H ou un radical alkyle, où le matériau polymère peut être obtenu par réaction des quatre composants suivants:
a) un polyol, principalement un polyéther-polyol, d'une fonctionnalité de 1,5 à 3 et
b) un composé dont la molécule contient au moins un groupe salin anionique de la structure susmentionnée, éventuellement sous forme d'acide carbonique et/ou d'acide sulfonique libre, ainsi qu'au moins deux groupes réactifs à l'isocyanate, comme par exemple des radicaux hydroxy, amino ou mercapto, et
c) un isocyanate aliphatique, cycloaliphatique ou aromatique contenant au moins deux radicaux isocyanate par molécule, et
d) un agent d'allongement de chaîne, c'est-à-dire un composé contenant au moins deux radicaux réactifs à l'isocyanate comme par exemple une molécule d'eau ou une diamine,
le rapport de a) : b) : c) : d) étant choisi de manière que tous les radicaux isocyanate réagissent.

3. Joint pulvérisable selon la revendication 2, caractérisé en ce que les composants a), b), c) et d) répondent aux critères suivants:
b) est mis en oeuvre en une quantité correspondant à 5-30 milliéquivalents de radicaux anioniques par 100 g de polymère,
a) + b) : c) est choisi de manière que 1,3 - 2,8 radicaux NCO aboutissent à un radical réactif NCO,
b) est choisi de manière que qu'il ne subsiste plus de radicaux NCO après la réaction.

4. Joint d'étanchéité pulvérisable selon les revendications 1 à 3, caractérisé en ce que la dispersion de polyuréthanne et/ou de polyuréthanne-urée est mise en oeuvre en mélange avec une autre dispersion polymérique.

5. Joint d'étanchéité pulvérisable selon l'une des revendications 1 à 4, caractérisé en ce que l'on utilise comme agent de coagulation des acides, des bases, des sels, un ciment ou d'autres liants hydrauliques ou hydrauliques latents, ou des mélanges de ces composés sous forme de solutions, de poudres ou de dispersions.

6. Joint d'étanchéité pulvérisable selon l'une des revendications 1 à 5, caractérisé en ce que le composant A et/ou le composant B contiennent des charges inorganiques comme par exemple du carbonate de calcium, de la poudre de quartz ou de l'oxyde d'aluminium, des charges organiques comme par exemple du noir de fumée ou un polymère en poudre, des pigments inorganiques comme par exemple du dioxyde de titane ou de l'oxyde de fer, ou des pigments organiques ou autres additifs comme des fibres, des antimoussants, des adjuvants filmogènes, des plastifiants, des épaississants, des fongicides, des agents nivelants, des antigels, des promoteurs d'adhésivité et des agents mouillants, la fraction de polymère dans le solide du joint d'étanchéité se situant entre 10 et 99%, de préférence entre 30 et 60%.

7. Procédé de préparation d'une membrane imperméable, caractérisé en ce que l'on utilise un joint d'étanchéité selon l'une des revendications 1 à 6, les composants A et B sont mélangés dans un gicleur ou directement hors d'un gicleur ou de plusieurs gicleurs d'une machine de pulvérisation, et que le mélange ainsi préparé est appliqué sur le substrat à recouvrir.

8. Procédé selon la revendication 7, caractérisé en ce que, avant l'application du joint d'étanchéité sur le substrat ou son soudage dans celui-ci, on applique un agent de drainage, de manière à réaliser un système de drainage permettant l'écoulement de l'eau faisant pression derrière le joint pulvérisé.

9. Procédé selon la revendication 8, caractérisé en ce que l'on pose, en tant que système de drainage, des bandes de drainage, par exemple sous la forme de voiles de drainage bien connus en construction de tunnels.

10. Procédé de préparation d'un polymère selon l'une des revendications 2 à 6, caractérisé en ce que l'on fait réagir les réactifs suivants:
a) un polyol, en particulier un polyéther-polyol d'une fonctionnalité de 1,5 à 3,
b) un composé dont la molécule contient au moins un groupe salin de la structure indiquée à la revendication 2, éventuellement sous forme de l'acide sulfonique ou de l'acide carbonique libre, ainsi qu'au moins deux radicaux réactifs à l'isocyanate, comme par exemple des radicaux hydroxy, amino ou mercapto,
c) un isocyanate aliphatique, cycloaliphatique ou aromatique comportant au moins deux radicaux isocyanate par molécule, et
d) un agent d'allongement de chaîne, c'est-à-dire un composé contenant au moins deux radicaux réactifs à l'isocyanate;
le rapport de a) : b) : c) : d) étant choisi de manière que tous les radicaux isocyanate réagissent.
